Europäisches Patentamt

European Patent Office

Office européen des brevets

(11) Numéro de publication: **0 178 257**
**A2**

# (12) DEMANDE DE BREVET EUROPEEN

(21) Numéro de dépôt: **85810445.8**

(22) Date de dépôt: **30.09.85**

(51) Int. Cl.⁴: **G 01 C 9/28**, G 01 B 3/02

(30) Priorité: **05.10.84 CH 4803/84**

(71) Demandeur: **EXPLOITENOV SA, 34 rue du Valentin, CH-1004 Lausanne (CH)**

(43) Date de publication de la demande: **16.04.86 Bulletin 86/16**

(72) Inventeur: **Joye, André, 20, chemin de Boston, CH-1004 Lausanne (CH)**

(74) Mandataire: **Vuille, Roman et al, c/o KIRKER & Cie S.A. 14, rue du Mont-Blanc Case Postale 872, CH-1211 Genève 1 (CH)**

(84) Etats contractants désignés: **CH DE FR GB IT LI SE**

(54) **Niveau à bulle avec graduation de mesure de distance.**

(57) Pour faciliter le marquage d'axes, le niveau à bulle (1) comporte un corps (2) avec un ou deux curseurs (10, 20). Les curseurs sont allongés et mobiles avec frottement dans la direction de la longueur du corps. Le corps (2) porte une graduation (30) partant par exemple du milieu (6) du corps. Chaque curseur (10, 20) porte au moins un repère (11, 12, 21, 22). Par déplacement des curseurs, on donne à une paire de repères (11, 21; 21, 22) l'écartement voulu par l'entre-axe et le niveau (1) est prêt à servir pour tracer les axes.

EP 0 178 257 A2

Niveau à bulle avec graduation
de mesure de distance

L'invention concerne un niveau à bulle destiné à faciliter le marquage d'un axe à une distance donnée d'une référence et notamment pour le marquage de deux axes avec une distance d'entre-axe donnée sur une droite horizontale.

On sait que le marquage d'axe sur un mur est un travail fréquent et que, selon les données reçues sur le plan, l'axe à marquer se trouve

- à une certaine distance d'une droite de référence verticale ou d'une paroi verticale latérale et à la même hauteur qu'un point marqué sur la droite de référence ou la paroi,

- à une certaine distance d'une droite de référence verticale ou d'une paroi verticale latérale et à une distance donnée du plancher ou du plafond,

- à une certaine distance d'une droite de référence horizontale ou du plancher ou du plafond et à la verticale d'un point marqué sur la droite de référence, le plancher ou le plafond,

- ou bien deux axes sont à marquer symétriquement à une distance donnée d'une droite de référence verticale.

La liste de ces cas n'est pas exhaustive. Dans de tels cas, le marquage nécessite un mètre, un niveau, un crayon, trois objets à tenir avec deux mains; tracer une droite parallèle exige deux mesures de distance, tracer un axe exige l'intersection d'une droite, construite parallèlement à une référence, avec une droite horizontale ou verticale mesurée avec un niveau, etc. On voit que pour chaque axe plusieurs opérations successives sont nécessaires.

Le but de l'invention est de simplifier ce travail de façon à déplacer un repère de lecture en face de la valeur voulue d'une graduation de distance prévue sur le niveau, puis de prendre le niveau d'une main, de le placer de façon adéquate contre le mur - par exemple en butée contre une paroi latérale ou en ajustant un de ses repères avec une droite de référence - tout en faisant jouer les bulles et de marquer avec le crayon dans l'autre main sur le mur certains repères du niveau.

Le niveau à bulle selon l'invention a été conçu pour répondre à ces exigences et est défini par les caractéristiques de la revendication 1.

Plusieurs formes d'exécution vont être décrites ci-dessous à titre d'exemple et en se référant à des dessins, ce qui permettra de mieux comprendre l'invention.

La figure 1 représente un niveau avec un curseur et un corps de niveau portant une graduation,

la figure 2 représente un niveau avec un curseur portant une graduation,

la figure 3 représente un niveau avec deux curseurs,

la figure 4 représente une coupe transversale d'un niveau et d'un curseur,

et la figure 5 représente une partie de niveau équipée d'une bande de mesure enroulée.

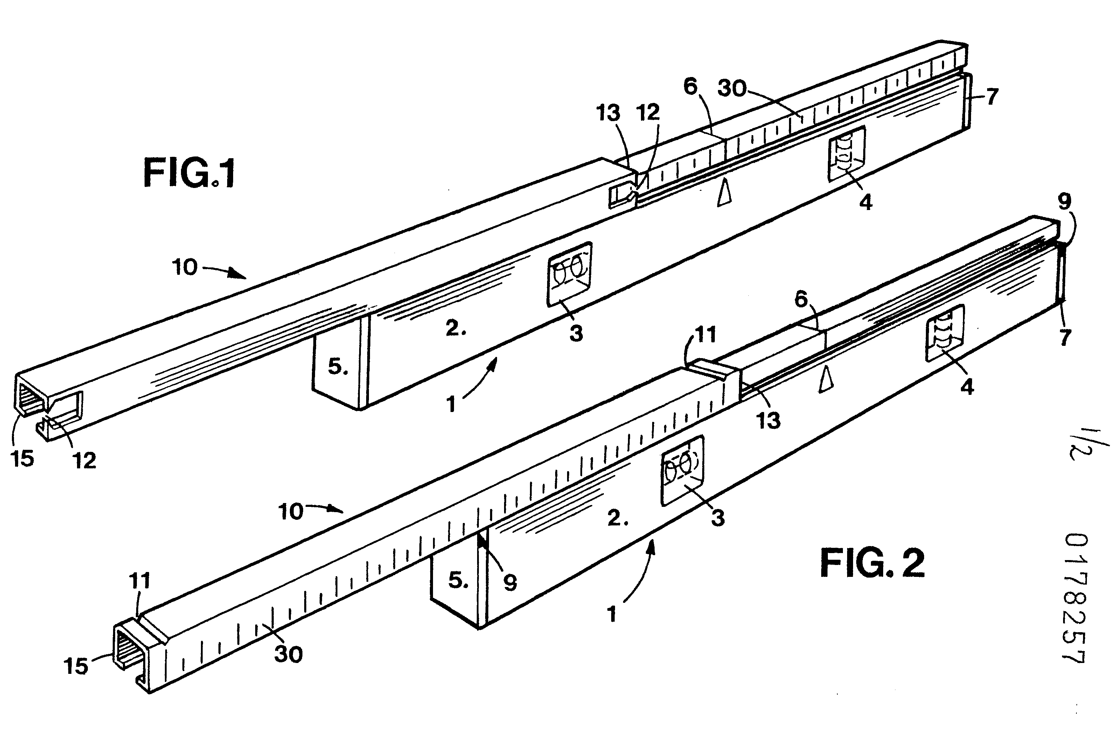

On voit sur la figure 1 un niveau 1 comportant un corps 2 de niveau de forme usuelle avec deux bulles 3 et 4 permettant de plaquer le niveau contre un mur pour obtenir une droite de mesure de direction horizontale si on a fait jouer la bulle 3 ou une droite de mesure de direction verticale si on a fait jouer la bulle 4. Les axes des 2 bulles définissent le plan de mesure qui est parallèle à une face latérale du niveau; lorsque le niveau est plaqué contre un mur, celui-ci définit le plan de mesure. Le corps 2 du niveau 1 porte une graduation 30 qui commence par exemple à l'extrémité 7 du corps. Un curseur 10 est guidé pour glisser avec frottement selon la direction longitudinale du niveau 1; il porte un repère 12 à chaque extrémité 13,15. Le repère 12 consiste en une échancrure dont l'extrémité a la forme d'un indice de lecture, qui permet de lire facilement et sans parallaxe la valeur de la graduation 30 apparaissant face à l'indice. Les repères 12 ne sont représentés à la figure 1 que sur une face latérale du curseur, cela pour des raisons de clarté. Avantageusement des repères 12 se trouveront sur chaque face latérale du curseur et également une graduation 30 se trouvera sur chaque face latérale du corps.
Cela permet à l'ouvrier de travailler indifféremment avec
les deux côtés du niveau; de plus lorsqu'on applique par
exemple le niveau contre un mur en plaçant le repère 12 de
l'extrémité 15 sur une droite de référence tracée sur un
mur, la correspondance du repère et de la droite de référence peut être contrôlée sans erreur de parallaxe. Il est
clair que la graduation 30 peut être placée sous le curseur 10 comme dans la fig. 1, mais qu'elle peut aussi bien
être placée dans une bande du corps adjacente au curseur,
le repère 12 serait alors un index pointant du curseur
vers la graduation; cette solution n'est pas représentée.

Pour tracer un axe sur un mur à une distance
donnée d'une paroi verticale latérale au même niveau qu'un
point de cette paroi, on déplace le curseur 10 pour placer
le repère 12 de son extrémité 13 sur la valeur de la
graduation 30 correspondant à la distance donnée. L'extrémité du corps est mise en butée contre la paroi verticale
latérale, le haut du corps étant aligné avec le point
donné de la paroi. L'axe cherché est marqué à l'emplacement du repère 12 de l'extrémité 13.

Si la distance donnée est plus grande que la
longueur du corps de niveau, il faut soustraire de cette
distance donnée la longueur du curseur 10, placer le
chiffre ainsi obtenu à la graduation comme décrit ci-
dessus. Cette fois-ci, l'axe cherché se trouvera à
l'emplacement du repère 12 à l'autre extrémité 15 du
curseur. Avec un curseur ayant la même longueur que le
corps 2 du niveau, on peut travailler avec une plage de
distances correspondant approximativement au double de la
longueur du corps du niveau. On a en tout cas avantage à
donner aux distances entre repères du même curseur ou entre
les repères du corps des valeurs faciles à mémoriser, de
sorte que l'ouvrier peut facilement ajouter ou retrancher
les chiffres corrects selon les repères utilisés. Il est
pratique de marquer le milieu 6 du corps 2 dans le sens de
la longueur.

La forme d'exécution de la figure 2 se distingue de celle de la figure 1 seulement dans les points suivants: la graduation 30 est portée par le curseur 10 et lue avec l'indice 9 placé sur le corps 2. Le curseur 10 porte à une distance définie de ses extrémités 13, 15 les repères 11. Avantageusement le curseur 10 est un peu plus long que le corps 2 et la distance entre les repères 11 du curseur 10 est la même que la longueur du corps 2. On voit qu'avec cette exécution on peut régler le niveau pour n'importe quelle distance située entre zéro et le double de la longueur du corps 2, sans que le curseur 10 guidé longitudinalement sur le corps sorte de son guidage. Les deux particularités décrites - à savoir que la graduation est portée par le curseur et que les repères 11, 12 ne se trouvent pas aux extrémités du curseur - ne sont pas liées entre elles.

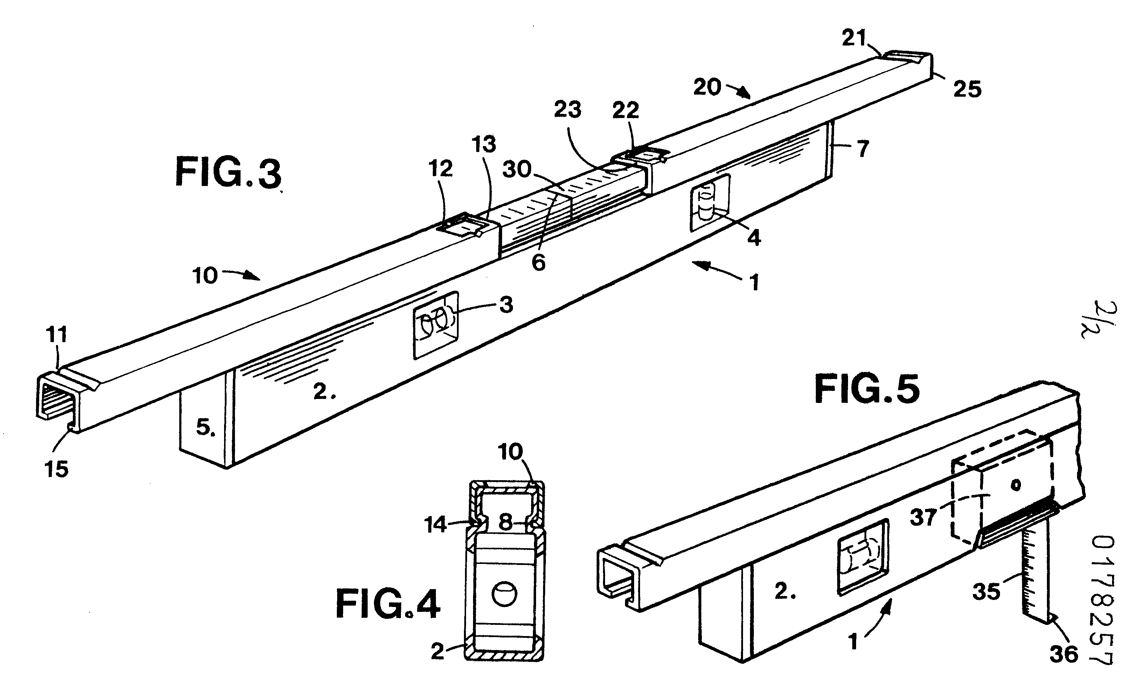

On peut aussi équiper le niveau avec deux curseurs dont la longueur totale bout à bout correspond exactement ou approximativement à la longueur du corps. Cette variante représentée dans une forme d'exécution à la figure 3 peut aussi être réalisée dans d'autres formes d'exécution utilisant par exemple les particularités décrites à l'occasion des fig. 1 et 2.

Le niveau 1 représenté à la figure 3 porte deux curseurs symétriques 10 et 20 avec leurs repères respectifs 11,12 et 21,22. La graduation 3 est représentée comme solidaire de la face supérieure du corps. Des variantes avec une graduation sur chaque face latérale du corps, soit sous le curseur comme à la fig. 1, soit placée de façon adjacente à chaque curseur, soit encore avec des graduations sur les curseurs comme à la fig. 2, sont faciles à imaginer.

Avantageusement la graduation 30 sera symétrique par rapport au milieu 6 du corps 2 du niveau. Pour tracer sur un mur par exemple deux axes à la même hauteur et avec un entre-axe donné, on procède comme suit: les repères 12 et 22 sont placés sur la graduation 30 de façon à obtenir la distance d'entre-axe désirée soit entre les repères 11 et 21 soit entre les repères 12 et 22.

La figure 4 représente une coupe transversale à travers le corps 2 du niveau et du curseur 10; le corps 2 comporte des moyens de guidage pour retenir le curseur, par exemple sous forme de 2 rainures 8 qui se font face, le curseur 10 étant doté de guides proéminents 14 entrant dans ces rainures 8 et y étant retenus transversalement tout en pouvant coulisser longitudinalement. Un frottement doux est prévu pour ce mouvement de coulissement pour que lorsque le curseur 10 est placé à la main dans une position donnée grâce à la lecture de la graduation 30, il ne se déplace pas de lui-même.

A la figure 5, un complément à une quelconque des formes d'exécution décrites est représenté. Une bande de mesure 35, enroulée dans un boîtier 37, présente une extrémité libre 36. Dans la forme d'exécution de la figure 5, le boîtier 37 est encastré dans le corps 2 du niveau 1 de façon que l'extension de l'extrémité libre 36 se fait perpendiculairement à la direction de coulissement du curseur, qui est celle de la droite de mesure du niveau, mais toujours encore dans le plan de mesure du niveau. On voit immédiatement comment tracer une droite horizontale à une distance donnée d'un plancher; mais cette opération peut être combinée avec l'établissement d'une distance dans la direction de coulissement du curseur comme décrit à l'occasion des figures 1 et 2. On peut facilement imaginer que le boîtier 37 de la bande de mesure 35 peut être tourné de 90° autour de son pivot central de sorte que l'extension de la bande peut se faire dans la même direction que la direction de coulissement du ou des curseurs. Ainsi par exemple, le milieu 6 du niveau peut être placé à une certaine distance d'une paroi verticale latérale, puis des axes symétriques à ce milieu 6 peuvent être tracés. On peut aussi imaginer que le boîtier 37 est appliqué extérieurement sur le corps 2, qu'il peut prendre non seulement les deux positions décrites ci-dessus mais quatre positions crantées à 90° les unes des autres et d'autres positions intermédiaires. Enfin la graduation de la bande de mesure 35 et son index de lecture peuvent être agencés de façon à permettre une lecture directe de la

6

0178257

distance entre l'extrémité libre 36 et un emplacement clairement défini du niveau, soit par exemple la droite de mesure du niveau passant par le repère du curseur, soit le milieu du corps, selon la direction choisie pour l'extension de la bande.

## Revendications

1. Niveau à bulle (1) caractérisé en ce qu'il comprend pour le marquage d'axes un corps (2) portant un ou deux curseurs (10,20) mobiles avec frottement et allongés dans la direction de la longueur du corps du niveau et portant au moins un repère (11,21), et une graduation (30) dans la même direction, agencés de façon à fournir la distance entre un repère (11) du curseur ou du premier curseur (10) et un repère (5,6,7) du corps (2) ou respectivement un repère (21) du second curseur (20).

2. Niveau selon la revendication 1, caractérisé en ce que l'extrémité (13, 15, 23, 25) d'un curseur (10,20) forme le repère du curseur ou bien se trouve à une distance définie de ce repère (11,21).

3. Niveau selon la revendication 1 ou 2, caractérisé en ce que les extrémités (5,7) et le milieu (6) du corps (2) servent de repères du corps (2).

4. Niveau selon l'une des revendications 1 à 3, caractérisé en ce que la graduation (30) est placée sur le corps (2) du niveau sous le ou de façon adjacente au curseur (10,20) et que le curseur (10,20) porte au moins un repère de lecture (12,22) placé à une extrémité (13,15;23,25) du curseur ou proche de ladite extrémité pour permettre de lire sur la graduation (30) ladite distance.

5. Niveau selon l'une des revendications 1 à 3, caractérisé en ce que la graduation (30) est placée sur le curseur (10,20) de façon adjacente à une face visible du corps (2) et que le corps (2) porte au moins un repère de lecture (9) à une extrémité (5,7) du corps ou proche de ladite extrémité pour permettre de lire sur la graduation (30) ladite distance.

6. Niveau selon l'une des revendications 1 à 5, caractérisé en ce qu'il comprend deux curseurs (10,20) qui sont, ainsi que la graduation(30), agencés symétriquement par rapport au milieu (6) du corps (2) du niveau.

7. Niveau selon l'une des revendications 1 à 6, caractérisé en ce que la longueur du corps (2) du niveau est approximativement ou exactement la même que la longueur du curseur unique (10) ou que la longueur totale des deux curseurs (10,20) mis bout à bout.

8. Niveau selon l'une des revendications 1 à 7, caractérisé en ce qu'il comprend une bande de mesure (35) enroulée, portant une graduation et extensible dans une direction dans le plan de mesure du niveau (1) pour permettre de mesurer une seconde distance entre le niveau et l'extrémité libre (36) de la bande de mesure (35).

9. Niveau selon la revendication 8, caractérisé en ce que le boîtier (37) de la bande de mesure (35) est fixé pivotant au corps (2) du niveau de façon à permettre selon la position du boîtier (36) au moins une extension et donc une mesure dans une direction perpendiculaire à la droite de mesure du niveau et après rotation du boîtier d'un angle de 90° une extension et une mesure dans une direction alignée avec la droite de mesure du niveau.

10. Niveau selon la revendication 8 ou 9, caractérisé en ce qu'un repère de lecture et la graduation de la bande de mesure (35) sont agencés de façon à ce que la lecture de la graduation de la bande (35) fournisse la seconde distance depuis l'extrémité libre (36) de la bande de mesure (35) jusqu'à soit la droite de mesure du niveau passant par le repère (11,21) du curseur (10,20), soit le milieu (6) ou une extrémité (5,7) du corps (2) du niveau, selon la direction choisie pour l'extension de la bande.

FIG.1

13  12

6  30

7

10

2.  3

5.  4

1

15  12

9

11

6

7

13

4

10

2.  3

5.  9

1

FIG. 2

15

11

30

1/2

0178257

0178257

FIG.3

FIG.4

FIG.5